# EUROPEAN PATENT SPECIFICATION

(11) **EP 2 698 931 B1**
(45) Date of publication and mention of the grant of the patent: **08.08.2018**
(21) Application number: 12771230.5
(22) Date of filing: 10.04.2012
(51) Int. Cl.: H04B 7/26, H04W 52/02

(54) **METHOD AND APPARATUS FOR USER EQUIPMENT TRANSMITTING REVERSE DIRECTION CONTROL SIGNAL IN MOBILE COMMUNICATION SYSTEM**
VERFAHREN UND VORRICHTUNG FÜR BENUTZERVORRICHTUNGEN ZUR ÜBERTRAGUNG VON RÜCKWÄRTSRICHTUNGS-STEUERSIGNALEN IN EINEM MOBILKOMMUNIKATIONSSYSTEM
PROCÉDÉ ET APPAREIL POUR ÉQUIPEMENT UTILISATEUR TRANSMETTANT UN SIGNAL DE COMMANDE EN DIRECTION INVERSE DANS UN SYSTÈME DE COMMUNICATION MOBILE

(30) Priority: 11.04.2011 US 201161473966 P; 10.08.2011 US 201161521910 P; 06.09.2011 US 201161531185 P; 27.10.2011 US 201161552114 P; 31.10.2011 US 201161553359 P; 07.11.2011 US 201161556779 P
(43) Date of publication of application: 19.02.2014
(73) Proprietor: Samsung Electronics Co., Ltd., Suwon-si, Gyeonggi-do 443-742 (KR)
(72) Inventor: KIM, Soeng Hun, Yongin-si Gyeonggi-do 446-882 (KR); VAN LIESHOUT, Gert-Jan, Staines Middlesex TW18 4QE (GB); JEONG, Kyeong In, Suwon-si Gyeonggi-do 443-711 (KR)
(74) Representative: Nederlandsch Octrooibureau
(86) International application number: PCT/KR2012/002727
(87) International publication number: WO 2012/141481

(56) References cited:
- KR-A- 20090 086 441
- KR-A- 20100 108 459
- KR-A- 20100 126 509
- PANASONIC ET AL: "CQI/ SRS/PMI/RI transmission during active time", 3GPP DRAFT; R2-086318, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Prague, Czech Republic; 20081104, 4 November 2008 (2008-11-04), XP050321306, [retrieved on 2008-11-04]
- SAMSUNG: "Discussion on CQI/SRS transmission during DRX", 3GPP DRAFT; R2-114180 CONTINUING CQI TEMPORARY, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Athens, Greece; 20110822, 16 August 2011 (2011-08-16), XP050539989, [retrieved on 2011-08-16]
- '3rd Generation Partnership Project; Technical Specification Group Radio Access Network; Evolved Universal Terrestrial Radio Access(E-UTRA);Medium Access Control(MAC) Protocol Specification(Release 10)' 3GPP TS 36.321, V10.1.0 March 2011, XP050477203

## Description

### Technical Field

The present disclosure relates to a method and apparatus for transmitting uplink control signals for a user equipment in a mobile communication system.

### Background Art

In general, mobile communication systems have been developed to provide communication services while guaranteeing user mobility. Thanks to rapid technological advancement, mobile communication systems are capable of providing not only voice communication services but also high-speed data communication services.

Recently, the 3rd Generation Partnership Project (3GPP) has been working to standardize specifications for the Long Term Evolution (LTE) system as a next generation mobile communication system. The LTE system is expected to be commercially available in about 2010, and aims to realize high-speed packet based communication supporting a data rate of 100 Mbps exceeding existing data rates. With completion of LTE system standardization, to achieve higher data rates, 3GPP started to develop the LTE-Advanced (LTE-A) system by introducing various new communication schemes to the LTE system. In the description, the existing LTE system and the LTE-A system are collectively referred to as the LTE system.

Carrier aggregation (CA) and MIMO are representative ones of the communication schemes to be newly introduced. Carrier aggregation is a technology that enables a user equipment to send and receive data using multiple carriers. Here, the user equipment may send and receive data through a number of cells (normally, these cells belong to the same base station) associated with multiple aggregated carriers.

PANASONIC ET AL: "CQI/ SRS/PMI/RI transmission during active time", 3GPP DRAFT; R2-086318, 3RD GENERATION PARTNERSHIP PROJECT (3GPP), MOBILE COMPETENCE CENTRE ; 650, ROUTE DES LUCIOLES ; F-06921 SOPHIAANTIPOLIS CEDEX ; FRANCE, no. Prague, Czech Republic, discloses a UE may optionally choose to not send CQ1/PM1/R1 reports on PUCCH and/or SRS transmissions for up to 4 subframes following a PDCCH indicating a new transmission (UE or DE) received in the last subframe of active time. This is not applicable for subframes where On Duration timer is running.

SAMSUNG: "Discussion on COI/SRS transmission during DRX", 3GPP DRAFT; R2-114180 CONTINUING COI TEMPORARY, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Athens, Greece, discloses a possibility regarding at which downlink subframe Active Time ends if PDCCH or DRX MAC CE is received at downlink subframe n, at which uplink subframe CQI/PMI/RI/PTI is not reported, and how to define UE behavior if Active Time ends unexpectedly.

### Disclosure of Invention

Any occurrence of the term "embodiment" in the description has to be considered as an "aspect of the invention", the invention being defined only in the appended independent claims.

### Technical Problem

An aspect of the present disclosure is to provide a method and apparatus that enable a user equipment supporting discontinuous reception (DRX) to distinguish a subframe in which control signal transmission is mandatory from another subframe in which control signal transmission is optional when the active time is extended.

### Solution to Problem

In accordance with an aspect of the present disclosure, a method for a user equipment to transmit control signals to a base station in a wireless communication system supporting discontinuous reception (DRX) is provided. The method may include: receiving a downlink control channel indicating new uplink or downlink transmission in a first period preset with reference to the last subframe of an active time; and selectively skipping transmission of a control signal in a preset second period starting from a subframe at which the downlink control channel is received.

In accordance with another aspect of the present disclosure, a user equipment transmitting control signals to a base station in a wireless communication system supporting discontinuous reception (DRX)is provided. The user equipment may include: a transceiver unit to send and receive signals to and from the base station; and a control unit determining, when a downlink control channel indicating new uplink or downlink transmission is received by the transceiver unit in a first period preset with reference to the last subframe of an active time, whether to selectively transmit a control signal in a preset second period starting from a subframe at which the downlink control channel is received.

### Advantageous Effects of Invention

In a feature of the present disclosure, for transmission of uplink control signals in a mobile communication system, a user equipment in DRX operation is capable of distinguishing a situation where higher than normal processing power may be needed from another situation where higher than normal processing power is not needed and is allowed to send an uplink control signal only when higher than normal processing power is not needed. Hence, it is possible to prevent loss of uplink control signals.

### Brief Description of Drawings

FIG. 1 illustrates an LTE system architecture, to which the present disclosure is applied.
FIG. 2 illustrates a hierarchy of wireless protocols in the LTE system, to which the present disclosure is applied.
FIG. 3 illustrates carrier aggregation supported by a user equipment.
FIG. 4 depicts a first embodiment of the present disclosure.
FIG. 5 is a sequence diagram describing UE and ENB operations according to the first embodiment of the present disclosure.
FIG. 6 is a flowchart describing UE operation according to the first embodiment of the present disclosure.
FIG. 7 is a sequence diagram describing UE and ENB operations according to a second embodiment of the present disclosure.
FIG. 8 is a flowchart describing UE operation according to the second embodiment of the present disclosure.
FIG. 9 is a flowchart describing UE operation according to a third embodiment of the present disclosure.
FIG. 10 is a block diagram of a user equipment according to an embodiment of the present disclosure.
FIG. 11 is a block diagram of a base station according to an embodiment of the present disclosure.

### Mode for the Invention

Hereinafter, embodiments of the present disclosure are described in detail with reference to the accompanying drawings. Detailed descriptions of well-known functions and structures incorporated herein may be omitted to avoid obscuring the subject matter of the present disclosure.

The present disclosure relates to a method and apparatus used by a user equipment to report performance thereof to the network. Before description of the present disclosure, the LTE system and carrier aggregation are described in brief.

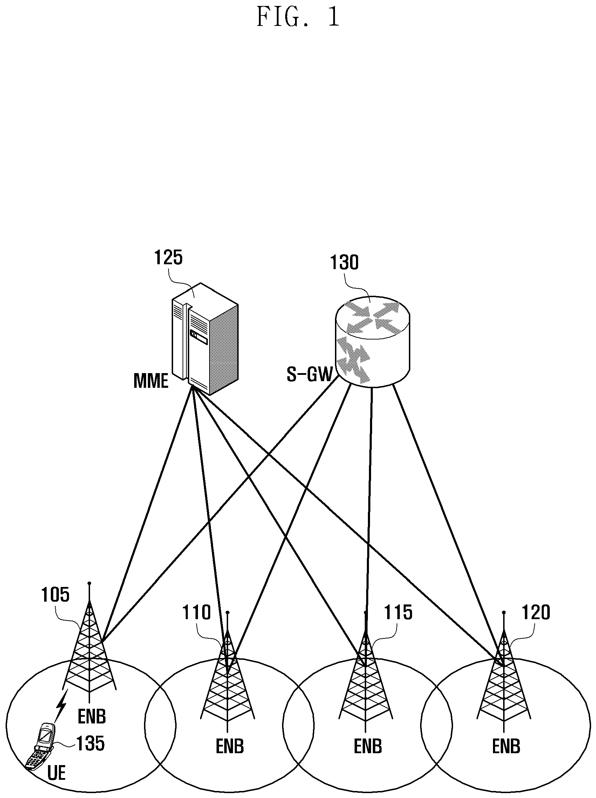

FIG. 1 illustrates an LTE system architecture, to which the present disclosure is applied.

Referring to FIG. 1, an LTE radio access network is composed of base stations (Evolved Node B, Node B, or ENB) 105, 110, 115 and 120, a Mobility Management Entity (MME) 125, and a Serving-Gateway (S-GW) 130. A User Equipment (UE) 135 may connect to an external network through the ENBs 105 to 120 and the S-GW 130.

In FIG. 1, the ENBs 105 to 120 correspond to Node Bs of the existing UMTS system. The ENB is connected to the UE 135 through a radio channel, and may perform more complex functions in comparison to the existing Node B. In the LTE system, as all user traffic including real-time services like VoIP (Voice over IP) services is served by shared channels, an entity is needed to perform scheduling on the basis of status information collected from UEs such as information on buffer states, available transmit power and channels. Each of the ENBs 105 to 120 performs this scheduling function.

In most cases, a single ENB controls multiple cells. To achieve a data rate of 100 Mbps, the LTE system utilizes Orthogonal Frequency Division Multiplexing (OFDM) in, for example, a 20 MHz bandwidth as radio access technology. Adaptive modulation and coding (AMC) is employed to determine the modulation scheme and channel coding rate according to UE channel states. The S-GW 130 provides data bearers, and creates and removes a data bearer under control of the MME 125. The MME 125 performs various control functions including UE mobility management and is connected to multiple ENBs.

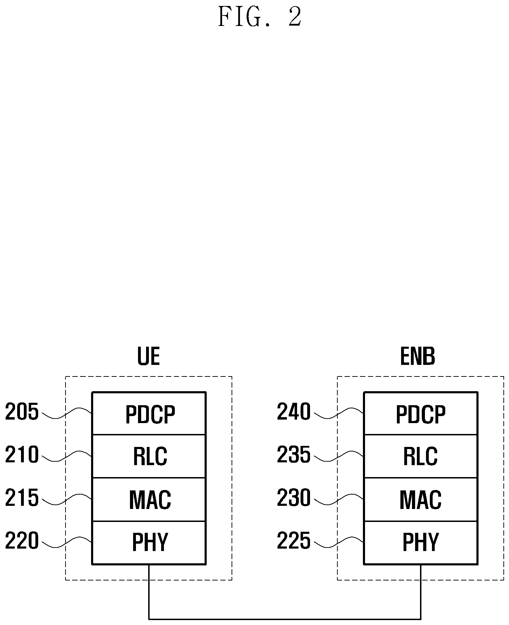

FIG. 2 illustrates a hierarchy of wireless protocols in the LTE system, to which the present disclosure is applied.

Referring to FIG. 2, for a UE and ENB in the LTE system, the wireless protocol stack is composed of Packet Data Convergence Protocol (PDCP) 205 or 240, Radio Link Control (RLC) 210 or 235, Medium Access Control (MAC) 215 or 230, and a physical (PHY) layer 220 or 225. The PDCP 205 or 240 performs compression and decompression of IP headers. The RLC 210 or 235 reconfigures PDCP PDUs (Protocol Data Unit) to a suitable size to conduct ARQ operations and the like.

The MAC 215 or 230 is connected to multiple RLC layer units in the same UE, and multiplexes RLC PDUs into MAC PDUs or demultiplexes MAC PDUs into RLC PDUs. The physical layer 220 or 225 converts higher layer data into OFDM symbols by means of channel coding and modulation and transmits the OFDM symbols through a wireless channel, or converts OFDM symbols received through a wireless channel into higher layer data by means of demodulation and channel decoding and forwards the data to higher layers.

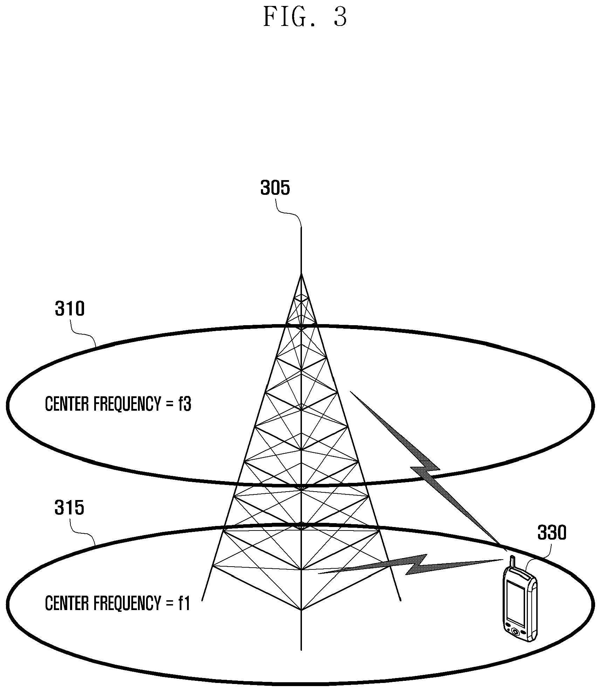

FIG. 3 illustrates carrier aggregation supported by a user equipment.

Referring to FIG. 3, one ENB transmits and receives multiple carriers across multiple frequency bands. For example, assume that the ENB 305 transmits a carrier 315 with a center frequency f1 and a carrier 310 with a center frequency f3. An existing UE may use one of the two carriers to send and receive data. However, a UE having a carrier aggregation capability may send and receive data to and from multiple carriers in parallel. Here, the ENB 305 may assign more carriers to the UE 330 having a carrier aggregation capability according to situations, increasing the data rate of the UE 330.

In a traditional sense, it may be considered that one cell is formed by a downlink carrier and an uplink carrier provided by the same base station. In carrier aggregation, a user equipment may be considered as sending and receiving data through multiple cells in parallel. Hence, the maximum data rate of the user equipment may be increased in proportion to the number of aggregated carriers.

In the following description, for a UE, data reception through a downlink carrier and data transmission through an uplink carrier may be identical in meaning to data transmission and reception through control and data channels provided by cells corresponding to center frequencies and frequency bands characterizing the above carriers.

For efficient utilization of radio transmission resources in a given communication network, the UE sends preset control information to the ENB on a regular or occasional basis. For example, such control information may include Channel Quality Indicator (CQI), Precoding Matrix Indicator (PMI), Rank Indicator (RI), Precoding Type Indicator (PTI), Sounding Reference Signal (SRS), and HARQ feedback signal. Here, CQI, PMI, RI and PTI may also be referred to as Channel State Information (CSI). The CSI may be transmitted through Physical Uplink Control Channel (PUCCH) or be embedded in a part of Physical Uplink Shared Channel (PUSCH) for transmission. The SRS may be transmitted at the last symbol of the PUSCH.

These information may be information on downlink channel quality experienced by the UE, information usable by the ENB to estimate uplink channel quality experienced by the UE, or HARQ feedback information as to downlink data. Uplink control signals excluding the SRS are transmitted only by the Primary Cell (PCell), and the SRS may also be transmitted by a Secondary Cell (SCell). As described before, when carrier aggregation is used, multiple serving cells may be assigned to one UE, and one thereof is the PCell and the others are SCells. The PCell and SCell may be defined as follows.

Primary Cell: the cell, operating on the primary frequency, in which the UE either performs the initial connection establishment procedure or initiates the connection re-establishment procedure, or the cell indicated as the primary cell in the handover procedure.

Secondary Cell: a cell, operating on a secondary frequency, which may be configured once an RRC connection is established and which may be used to provide additional radio resources.

To minimize battery power consumption, a UE may operate in discontinuous reception (DRX) mode. Section 5.7 of 3GPP TS 36.321 may be referred for DRX related information. During DRX mode, a UE may monitor the Physical Downlink Control Channel (PDCCH) only for a particular duration set as the active time, so that the UE may switch off the transceiver thereof for the other duration. For ease of description, some DRX-related terms are described below.

Active Time: a time duration in which PDCCH reception is required during DRX operation. The active time may include the time while:
- onDurationTimer or drx-InactivityTimer or drx-RetransmissionTimer or mac-ContentionResolutionTimer is running (first type active time); or
- a Scheduling Request is sent on PUCCH and is pending (second type active time); or
- an uplink grant for a pending HARQ retransmission can occur and there is data in the corresponding HARQ buffer (third type active time); or
- a PDCCH indicating a new transmission addressed to the C-RNTI of the UE has not been received after successful reception of a Random Access Response for the preamble not selected by the UE (fourth type active time).

A UE in DRX mode sends the CSI and SRS in the active time and does not send the same in the non-active time. In normal situations, such DRX mode operation does not cause a problem.

However, when the active time is unexpectedly extended, owing to failure of preparation for sending an uplink control signal, the UE may be unable to transmit such uplink control signal in a section of the active time. This problem may occur particularly when the CSI signal is to be multiplexed on the PUSCH for transmission.

For example, assume that a UE is scheduled to perform PUSCH transmission at the subframe n+m and the active time is extended due to reception of a new scheduling request at the subframe n+m-k. Before the subframe n+m-k, the UE may prepare PUSCH transmission without CSI multiplexed at the subframe n+m. Owing to unexpected extension of the active time at subframe n+m-k, the UE has to change transmission at the subframe n+m to PUSCH transmission with CSI multiplexed. However, the UE may be unable to make such a sudden change, and hence may have to prepare both PUSCH transmission without CSI multiplexed and PUSCH transmission with CSI multiplexed.

In the present disclosure, to address the above problem, when the active time is unexpectedly extended, a duration in which the CSI has to be transmitted is separated from a duration in which CSI transmission is determined according to UE capabilities.

### <First Embodiment>

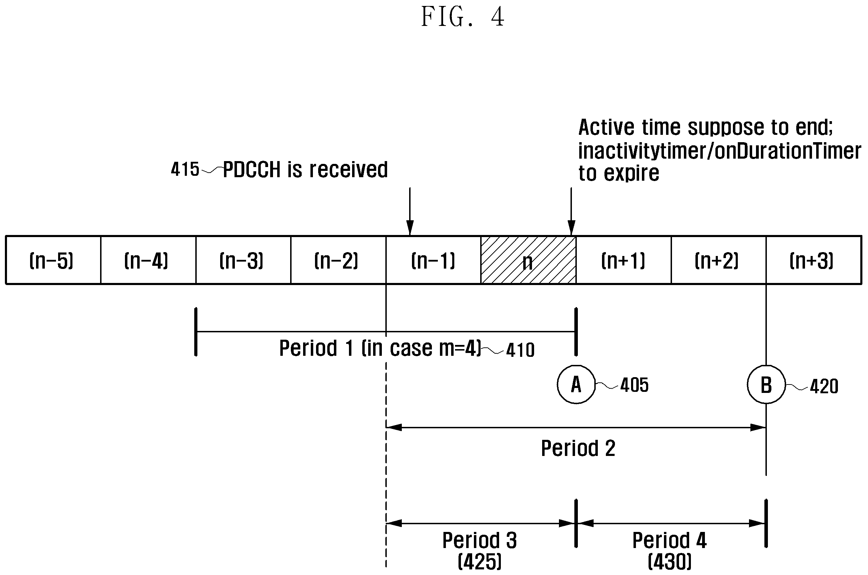

FIG. 4 depicts the first embodiment of the present disclosure.

With reference to a subframe 405 at which the active time is expected to end according to expiration of onDurationTimer or drx-inactivityTimer, a first period, second period, third period and fourth period are defined. In the following description, it is assumed that the subframe n is a subframe at which the active time is expected to end and the subframe n-k is a subframe at which an event extending the active time has occurred.

First period: a duration consisting of the subframe n and m-1 subframes preceding the subframe n. If m is assumed to be 4, the subframe n-3, subframe n-2, subframe n-1 and subframe n constitute the first period. In the present disclosure, when the active time is extended in the first period, the UE regards this extension as unexpected and may behave differently from the case of other active time extensions.

Here, m is a parameter related to processing capabilities to cope with active time extension. It is preferable for m to have a single fixed value for all UEs including low end terminals with low performance.

Second period: a duration consisting of a subframe at which an event extending the active time (e.g. PDCCH reception indicating new transmission) has occurred and m-1 subframes following the subframe. For example, if an event extending the active time has occurred at a subframe n-3 and m is 4, the second period consists of the subframe n-3, subframe n-2, subframe n-1 and subframe n. If an event extending the active time has occurred at a subframe n-2, the second period consists of the subframe n-2, subframe n-1, subframe n and sub frame n+1.

Third period: a duration in which the first period and second period overlap each other. That is, the third period consists of the subframes [n-k, n] (from n-k to n, inclusive). The last subframe of the third period is the subframe at which the active time has been expected to end.

As the third period has already belonged to the active time before extension of the active time, it is possible to transmit the CSI and SRS regardless of UE processing capabilities. Hence, determination of whether to transmit the CSI and SRS by the UE may reduce the chance for the ENB to receive the CSI and SRS, causing system performance degradation.

Fourth period: a duration of the second period not overlapping with the first period. That is, the fourth period consists of the subframes [n+1, n-k+m] (inclusive). The UE may be able or unable to transmit the CSI and SRS during the fourth period according to UE capability and the fourth period length.

For example, as the fourth period length approaches to m (that is, as the occurrence time of an event extending the active time becomes closer to the last subframe of the active time), the possibility of CSI and SRS transmission becomes lower in the former part of the fourth period and becomes higher in the latter part thereof. CSI and SRS transmission is possible after the fourth period.

When the active time is extended in the first period, the UE identifies the second, third and fourth periods. In subframes of the third period, the UE transmits the CSI and SRS (if CSI and SRS transmission is scheduled in these subframes). In subframes of the fourth period, the UE transmits the CSI and SRS if possible or does not transmit the CSI and SRS if not possible. After the fourth period, the UE normally transmits the CSI and SRS.

In other words, assuming that k is an integer between 0 and m-1, when the active time is extended according to reception of UL grant or DL assignment indicating new transmission at the subframe n-k, the UE normally transmits the CSI and SRS in subframes[n-k, n] corresponding to the third period, may skip CSI and SRS transmission in subframes[n+1, n+m-k] corresponding to the fourth period, and normally transmits the CSI and SRS after the subframe n+m-k.

In the present disclosure, as the UE clearly specifies a duration in which the CSI and SRS are to be transmitted, the frequency for the ENB to receive valid CSI and SRS information is increased, leading to system performance enhancement.

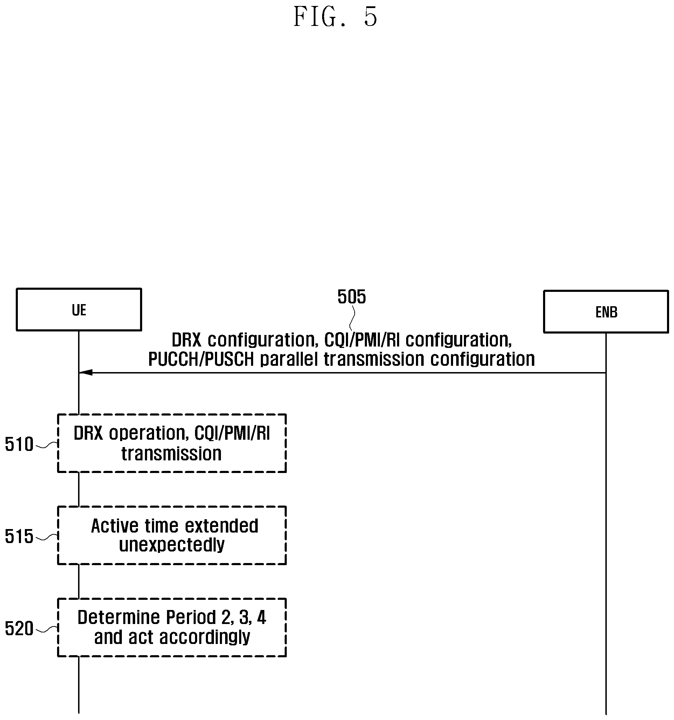

FIG. 5 describes UE and ENB operations according to the first embodiment of the present disclosure.

At operation 505, the UE receives various configuration information (described below) from the ENB and performs DRX, CSI/SRS configuration and the like.
- DRX configuration information: onDurationTimer, drx-InactivityTimer, drx-RetransmissionTimer, longDRX-CycleStartOffset, drxShortCycleTimer and the like
- PUCCH configuration information: information related to CSI transmission such as transmission resources and cycles to use for CSI transmission
- PUSCH/PUCCH parallel transmission configuration information: a UE may perform PUSCH transmission and PUCCH transmission in parallel according to its capabilities. As such UE may separately perform CSI transmission and PUSCH transmission without multiplexing, it may be free from or less seriously affected by the above described problem. The ENB may configure PUSCH/PUCCH parallel transmission for a specific UE in consideration of reported UE capability information and cell conditions.

At operation 510, the UE starts DRX operation. This indicates that the UE repeats a cycle of active time and non-active time according to preset rules and conditions. The UE monitors the PDCCH and transmits the CSI and SRS on the PUCCH during the active time, and does not monitor the PDCCH and does not transmit the CSI and SRS on the PUCCH during non-active time.

Here, CSI transmission on PUCCH (CSI on PUCCH) indicates that CSI information is transmitted through PUCCH transmission resources. CSI information is normally transmitted through PUCCH transmission resources, but may be transmitted through PUSCH transmission resources (CSI on PUSCH) in some exceptional cases.

The following is examples of CSI on PUCCH.
- CSI is transmitted alone in PUCCH
- CSI is transmitted with HARQ feedback in PUCCH
- CSI is transmitted with SR in PUCCH

When the CSI is transmitted together with a different control signal, the transport format for the CSI is changed to a pre-agreed transport format capable of sending the CSI together with the different control signal. Scheduling Request (SR) is a 1-bit signal sent by the UE to the ENB as a request for transmission resource allocation.

The following is examples of CSI on PUSCH.
- CSI is transmitted together with PUSCH when PUSCH is scheduled in the subframe where periodic CSI is configured
- CSI is transmitted together with PUSCH when aperiodic CSI is requested upon receiving PDCCH whose CQI-request bit is set

As CSI transmission through the PUSCH is predictable, the format change problem does not arise. Hence, during the fourth period, the UE is given freedom as to CSI transmission only in the case of CSI on PUCCH and is forced to transmit the CSI in the case of CSI on PUSCH.

At operation 515, the active time is unexpectedly extended. For example, assuming that the active time is scheduled to end at a subframe owing to expiration of onDurationTimer or drx-inactivityTimer, when a PDCCH indicating new downlink transmission or uplink transmission resource allocation is received within the first period set with reference to the subframe, the active time may be extended.

At operation 520, the UE determines the second period, third period and fourth period.

Thereafter, the UE performs operations in accordance with the determined periods. More specifically, the UE performs CSI on PUCCH, CSI on PUSCH, and SRS transmission during the third period. The SRS may be configured not only on the PCell but also on the SCell. During the third period, the UE performs SRS transmission in all serving cells where the SRS is configured and SRS transmission is scheduled in the third period.

During the fourth period, the UE may skip CSI on PUCCH and SRS transmission for the PCell and may perform CSI on PUSCH and SRS transmission for the SCell. Alternatively, the UE may perform CSI on PUCCH and SRS transmission for the PCell on a best effort basis during the fourth period.

That is, if time enough to prepare uplink transmission is given between a subframe at which an uplink control signal request is received and a subframe at which uplink transmission is to be performed, the UE performs CSI on PUCCH and SRS transmission for the PCell. Otherwise, the UE skips CSI on PUCCH and SRS transmission for the PCell. After the fourth period, the UE performs CSI on PUCCH and SRS transmission for each serving cell.

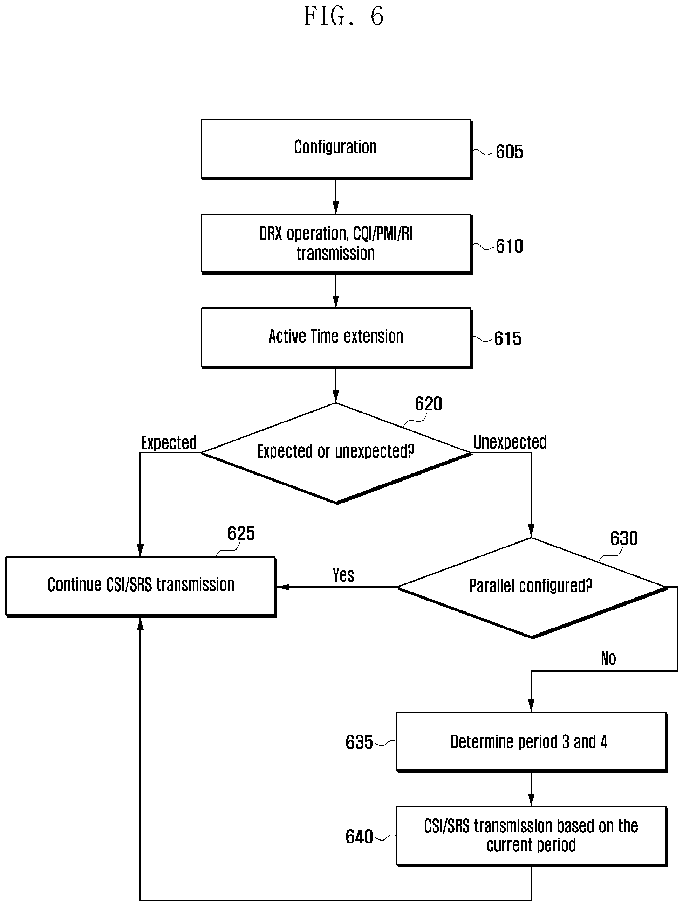

FIG. 6 is a flowchart describing UE operation according to the first embodiment of the present disclosure.

At operation 605, the UE receives various configuration information from the ENB and performs DRX, CSI and SRS configuration accordingly.

At operation 610, the UE initiates DRX operation and CSI/SRS transmission.

When the active time is extended at operation 615, the UE proceeds to operation 620 at which the UE checks whether the active time extension is expected or unexpected. Here, unexpected extension refers to generation of an event extending the active time within a preset duration preceding the last subframe of the active time. Expected extension refers to generation of an event extending the active time before the preset duration preceding the last subframe of the active time.

If the extension is expected, the UE proceeds to operation 625 at which the UE continues CSI/SRS transmission in the active time. If the extension is unexpected, the UE proceeds to operation 630 at which the UE checks whether PUSCH/PUCCH parallel transmission is configured.

If PUSCH/PUCCH parallel transmission is configured, as a transport format change is not a serious problem, the UE proceeds to operation 625.

If PUSCH/PUCCH parallel transmission is not configured, the UE proceeds to operation 635 at which the UE determines the third period and fourth period. At operation 640, the UE performs operations in accordance with each period. After the fourth period, the UE returns to operation 625 and continues CSI/SRS transmission during the active time.

The ENB receiving CSI/SRS information, as in the case of the UE, may determine the third period and fourth period and consider that the UE performs CSI/SRS transmission after the third period and the fourth period, the UE may or may not perform CSI/SRS transmission during the fourth period, and, when the third period is short in particular, occurrence of CSI/SRS transmission is highly improbable in the former part of the fourth period.

Here, the sum of the third period length and the fourth period length is always the same, and the third period length and the fourth period length may each be varied according to the point in time when an event extending the active time occurs.

### <Second Embodiment>

The SRS is used by the ENB to identify UE uplink channel states and to maintain UE uplink transmission timing. For identifying uplink channel states, it is preferable to steadily transmit the SRS with a long cycle; and, for maintaining uplink transmission timing, it is preferable to frequently transmit the SRS with a short cycle at a point in time when uplink data transmission is expected.

To address these conflicts, the present disclosure uses two types of SRS: long term SRS (or RRC-SRS) and short term SRS (or LI-SRS).

Long term SRS: it is configured and enabled by an RRC control message. SRS transmission resources and cycles are configured by the RRC control message. The UE periodically transmits the long term SRS if a preset condition is satisfied. As the long term SRS is enabled by an RRC control message, it cannot be rapidly enabled or disabled but may provide more detailed configuration information.

Short term SRS: it is configured and enabled through the PDCCH. Information regarding SRS transmission resources, cycles and repetition count are configured through PDCCH. When such a PDCCH is received, the UE performs SRS transmission. Some of the configuration information such as the cycle and repetition count may be configured in advance through an RRC control message. As the short term SRS is enabled through L1 signaling, it may be rapidly enabled in comparison to the RRC-SRS.

It is preferable to determine whether to transmit the RRC-SRS according to states of a cell for which the SRS is configured or DRX states of the UE. In a state where a SCell is deactivated, as the SCell does not have to maintain uplink transmission timing, the need for RRC-SRS transmission is reduced. During non active time, as there is no need to maintain uplink transmission timing for the UE, the need for RRC-SRS transmission is reduced.

On the other hand, as the L1-SRS is a command issued by the ENB to repeatedly transmit an SRS for a short time, it may be unreasonable of the UE to determine whether to transmit the SRS according to current UE states.

In the present disclosure, considering SCell and DRX states described above, the UE does not transmit an RRC-SRS when the SCell is deactivated or the transmission time belongs to non active time. Here, when the active time is unexpectedly extended, as described in connection with the first embodiment, the UE determines whether to transmit an RRC-SRS by itself in the fourth period. In contrast, when a PDCCH indicating L1-SRS transmission is received, the UE transmits an L1-SRS without consideration of active time or SCell activation states.

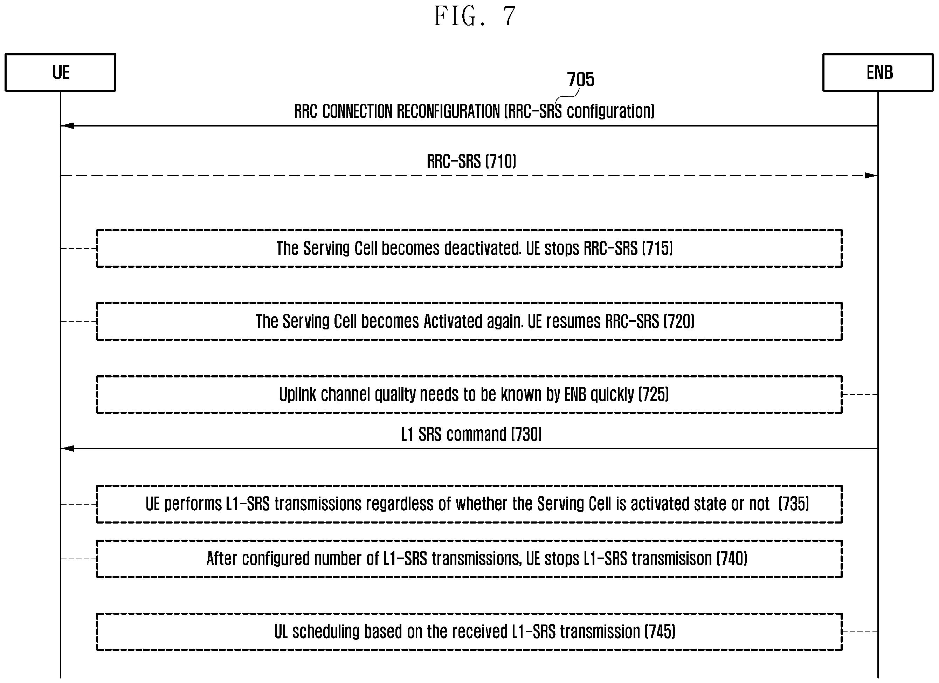

FIG. 7 is a sequence diagram describing UE and ENB operations according to the second embodiment of the present disclosure.

At operation 705, the ENB configures SRS transmission of the UE for an SCell needing maintenance of uplink transmission timing. RRC Connection Reconfiguration may contain the following information.
- CyclicShift, srs-Bandwidth, srs-ConfigIndex, serving cell ID and others
- These information elements indicate a subframe, physical resource block, cycle, and serving cell to be used for SRS transmission (refer to TS 36.321 for more detailed information on the above parameters).

At operation 710, the UE performs RRC-SRS configuration (SRS based on RRC signaling) and starts SRS transmission from the first subframe indicated by srs-ConfigIndex demanding SRS transmission. The UE continues SRS transmission while the serving cell is activated.

When a serving cell is activated during DRX active time, the serving cell is regarded as being activated. That is, an activated serving cell remains active in the active time of DRX operation (refer to Section 5.7 and 5.13 of TS 36.321 for more detailed information on DRX active time and DRX active state).

At operation 715, the serving cell is deactivated (that is, the active time expires or MAC CE indicating serving cell deactivation is received). The UE stops RRC-SRS transmission to the serving cell.

At operation 720, the serving cell is activated again. The UE resumes RRC-SRS transmission to the serving cell.

At operation 725, the ENB needs uplink channel state information for the serving cell immediately without time to wait for next RRC-SRS transmission. To trigger SRS transmission, the ENB sends an L1 command to the serving cell. The L1 command is sent on the PDCCH of the serving cell and contains a Carrier Indicator Field (CIF) indicating a serving cell to send an L1-SRS. The L1 command may contain the following information.

### Number of SRS transmissions, CyclicShift, srs-Bandwidth and others

The above information may be signaled to the UE in advance owing to limited space of the L1 command. In this case, the L1 command may contain only index information indicating a portion of the pre-signaled information to be used.

At operation 730, the UE starts L1-SRS transmission to the indicated serving cell without consideration of activation states thereof. L1-SRS transmission is started at a subframe closest to the requested point in time among subframes with configured SRS resources.

At operation 735, the UE stops L1-SRS transmission after reaching the configured number of L1-SRS transmissions.

At operation 740, the ENB performs uplink scheduling on the basis of the received L1-SRS transmissions.

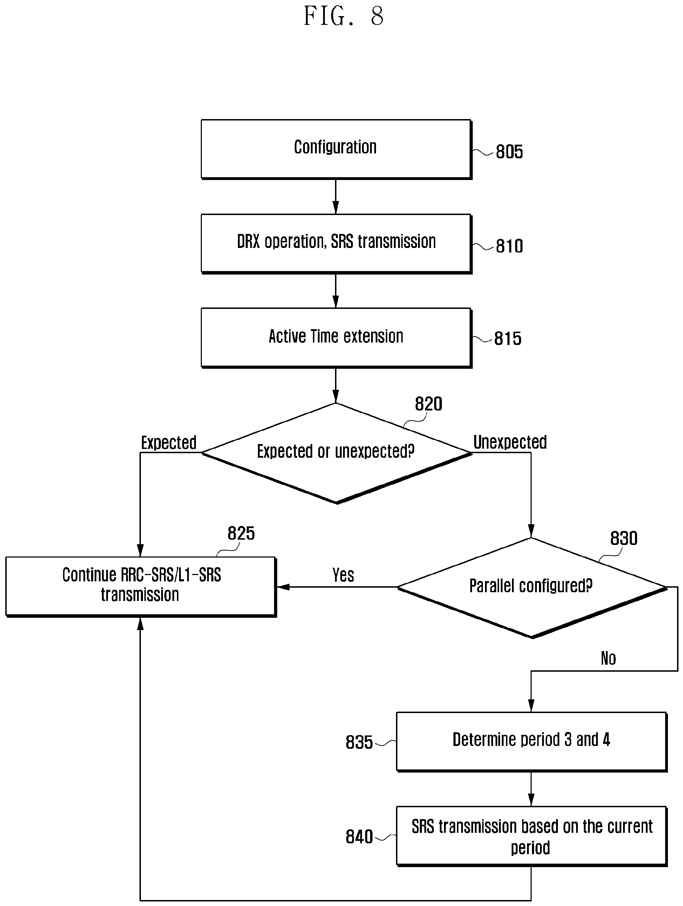

FIG. 8 is a flowchart describing UE operation according to the second embodiment of the present disclosure.

At operation 805, the UE receives various configuration information from the ENB and performs DRX and SRS configuration accordingly.

At operation 810, the UE initiates DRX operation and SRS transmission. When the active time is extended at operation 815, the UE proceeds to operation 820 at which the UE checks whether the active time extension is expected or unexpected. Here, unexpected extension refers to generation of an event extending the active time within a preset duration preceding the last subframe of the active time. Expected extension refers to generation of an event extending the active time before the preset duration preceding the last subframe of the active time.

If the extension is expected, the UE proceeds to operation 825 at which the UE continues RRC-SRS transmission and L1-SRS transmission in the active time. If the extension is unexpected, the UE proceeds to operation 830 at which the UE checks whether PUSCH/PUCCH parallel transmission is configured.

If PUSCH/PUCCH parallel transmission is configured, the UE proceeds to operation 825. If PUSCH/PUCCH parallel transmission is not configured, the UE proceeds to operation 835 at which the UE determines the third period and fourth period. At operation 840, the UE performs operations in accordance with each period.

After the fourth period, the UE returns to operation 825 and continues CSI/SRS transmission during the active time. In the third period, the UE performs both RRC-SRS transmission and L1-SRS transmission. In the fourth period, the UE may stop RRC-SRS transmission and perform L1-SRS transmission, or may perform RRC-SRS transmission on a best effort basis. That is, if time enough to prepare RRC-SRS transmission is given between a point in time when RRC-SRS transmission is known and a point in time when RRC-SRS transmission is to be performed, the UE performs RRC-SRS transmission. Otherwise, the UE skips RRC-SRS transmission.

The ENB receiving CSI/SRS information, as in the case of the UE, may determine the third period and fourth period and consider that the UE performs RRC-SRS transmission after the third period and the fourth period, the UE may or may not perform RRC-SRS transmission during the fourth period, and, when the third period is short in particular, occurrence of CSI/SRS transmission is highly improbable in the former part of the fourth period.

Here, the sum of the third period length and the fourth period length is always the same, and the third period length and the fourth period length may each be varied according to the point in time when an event extending the active time occurs.

### <Third Embodiment>

The third embodiment relates to SRS transmission by a UE in carrier aggregation operation. More specifically, in performing RRC-SRS and L1-SRS transmission to a SCell, when the active state of the SCell is extended, the UE may consider whether the active state extension is expected or unexpected.

When a SCell is in active state, the SCell is activated and remains in the DRX active time. During carrier aggregation operation, a serving cell may be activated or deactivated.

The PCell is always activated. A SCell is activated in the case of
- Reception of an Activation/Deactivation MAC CE indicating SCell activation.

A SCell is activated in the case of
- Reception of an Activation/Deactivation MAC CE indicating SCell deactivation, or
- expiration of the deactivation timer associated with the SCell.

The deactivation timer is configured for each Scell. The deactivation timer is restarted in the case of reception of an uplink grant for the Scell, reception of a downlink assignment for the Scell, or reception of an Activation/Deactivation MAC CE indicating activation of the Scell. Hence, events extending the active state of a Scell are as follows.
- Reception of an Activation/Deactivation MAC CE indicating activation of an activated Scell during the DRX active time
- Reception of DL assignment or UL grant for an activated Scell during the DRX active time

In the first case, as actual activation operation is performed after eight subframes from reception of an Activation/Deactivation MAC CE, there is no issue related to SRS transmission. However, in the second case, the UE may be unable to perform SRS transmission if the following situation occurs.
- Reception of an uplink grant or downlink assignment for the Scell at a subframe closely preceding the subframe n at which the deactivation timer is scheduled to expire.

That is, the UE does not prepare SRS transmission under the assumption that the Scell will be deactivated at the subframe n; but, due to abrupt extension of the active state of the Scell, the UE has to perform SRS transmission.

For effective SRS transmission between the UE and ENB in the above situation, a strategy similar to that used in the first embodiment may be utilized. That is, assuming that the active state is scheduled to end at a subframe n owing to expiration of the deactivation timer and an event extending the active state occurs at a subframe n-k, a fifth period, sixth period, seventh period and eighth period are defined as follows.

Fifth period: a duration consisting of the subframe n and x-1 subframes preceding the subframe n. If x is assumed to be 4, the subframe n-3, subframe n-2, subframe n-1 and subframe n constitute the fifth period. Reception of a DL assignment or UL grant for the Scell within the fifth period is described as unexpected extension of the active state.

Here, x is a parameter related to processing capabilities to cope with active state extension. It is preferable for x to have a single fixed value for all UEs including low end terminals with low performance.

Sixth period: when the active state is extended in the fifth period, a duration consisting of a subframe at which an event extending the active state (e.g. reception of a DL assignment or UL grant for the Scell) has occurred and x-1 subframes following the subframe.

For example, if an event extending the active state has occurred at a subframe n-3 and x is 4, the sixth period consists of the subframe n-3, subframe n-2, subframe n-1 and subframe n. If an event extending the active state has occurred at a subframe n-2, the sixth period consists of the subframe n-2, subframe n-1, subframe n and subframe n+1.

Seventh period: a duration in which the fifth period and sixth period overlap each other. That is, the seventh period consists of the subframes [n-k, n] (from n-k to n, inclusive). The last subframe of the seventh period is the subframe at which the active state has been expected to end.

As the seventh period has already belonged to the active state before extension of the active state, it is possible to transmit an SRS regardless of UE processing capabilities. Hence, determination of whether to transmit an SRS by the UE in the seventh period may reduce the chance for the ENB to receive an SRS, causing system performance degradation.

Eighth period: a duration of the sixth period not overlapping with the fifth period. That is, the eighth period consists of the subframes [n+1, n-k+x] (inclusive). The UE may be able or unable to transmit an RRC-SRS during the eighth period according to UE capability and the eighth period length.

For example, as the eighth period length approaches to x (that is, as the occurrence time of an event extending the active state becomes closer to the last subframe of the active state), the possibility of RRC-SRS transmission becomes lower in the former part of the eighth period and becomes higher in the latter part thereof. RRC-SRS transmission is possible after the eighth period.

For reference, as the UE is aware of a schedule of L1-SRS transmission before at least four subframes from the scheduled L1-SRS transmission, the UE is always able to perform L1-SRS transmission regardless of the above periods.

When the active state of a Scell is extended, the UE determines whether the active state extension is expected or unexpected; if unexpected extension, the UE performs RRC-SRS transmission in the seventh period, and may not perform RRC-SRS transmission or perform RRC-SRS transmission on a best effort basis in the eighth period; and the UE performs RRC-SRS transmission after the eighth period.

In other words, assuming that k is an integer between 0 and x-1, when the active state is extended according to reception of UL grant or DL assignment for the Scell at the subframe n-k, the UE normally transmits an RRC-SRS in subframes[n-k, n] corresponding to the seventh period, may skip RRC-SRS transmission in subframes[n+1, n+x-k] corresponding to the eighth period, and normally transmits an RRC-SRS after the subframe n+x-k.

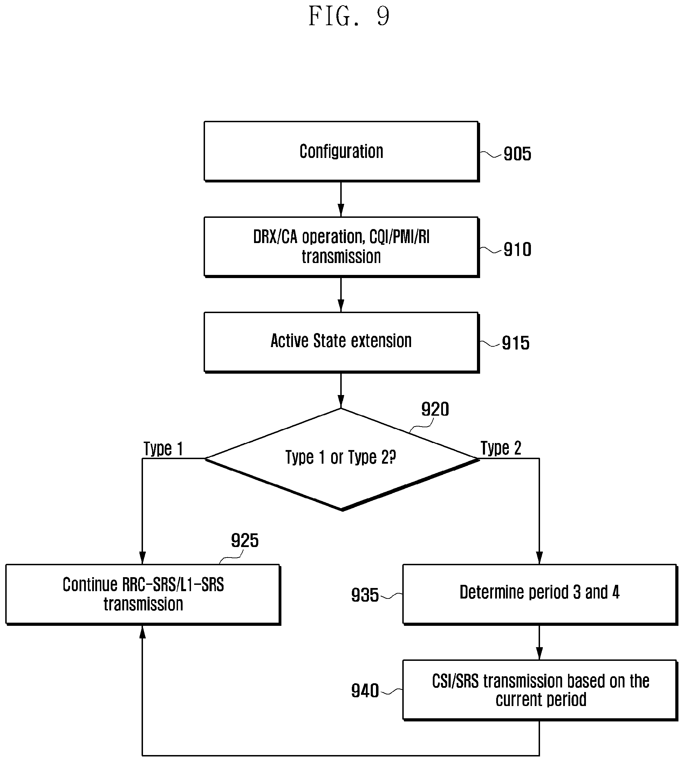

FIG. 9 is a flowchart describing UE operation according to the third embodiment of the present disclosure.

At operation 905, the UE receives various configuration information from the ENB and performs configurations for DRX, SRS and carrier aggregation operation accordingly.

At operation 910, the UE initiates DRX operation, carrier aggregation operation and SRS transmission. When the active state of a Scell with RRC-SRS configuration is extended at operation 915, the UE proceeds to operation 920 at which the UE checks whether the active state extension is of type 1 or of type 2. The UE proceeds to operation 925 if type 1 extension, and proceeds to operation 935 if type 2 extension.

Here, type 1 extension indicates an active state extension due to reception of Activation/Deactivation MAC CE or reception of DL assignment or UL grant before the fifth period. Type 2 extension indicates an active state extension due to reception of DL assignment or UL grant during the fifth period.

At operation 925, the UE continues RRC-SRS transmission and L1-SRS transmission to the Scell. At operation 935, the UE determines the seventh period and eighth period. At operation 940, the UE performs operations in accordance with each period. After the eighth period, the UE returns to operation 925 and continues SRS transmission in the active state.

The ENB receiving SRS information for a Scell, as in the case of the UE, may determine the seventh period and eighth period and consider that the UE performs RRC-SRS transmission after the seventh period and the eighth period, the UE may or may not perform SRS transmission during the eighth period, and, when the seventh period is short in particular, occurrence of SRS transmission is highly improbable in the former part of the eighth period.

Here, the sum of the seventh period length and the eighth period length is always the same, and the seventh period length and the eighth period length may each be varied according to the point in time when an event extending the active state occurs.

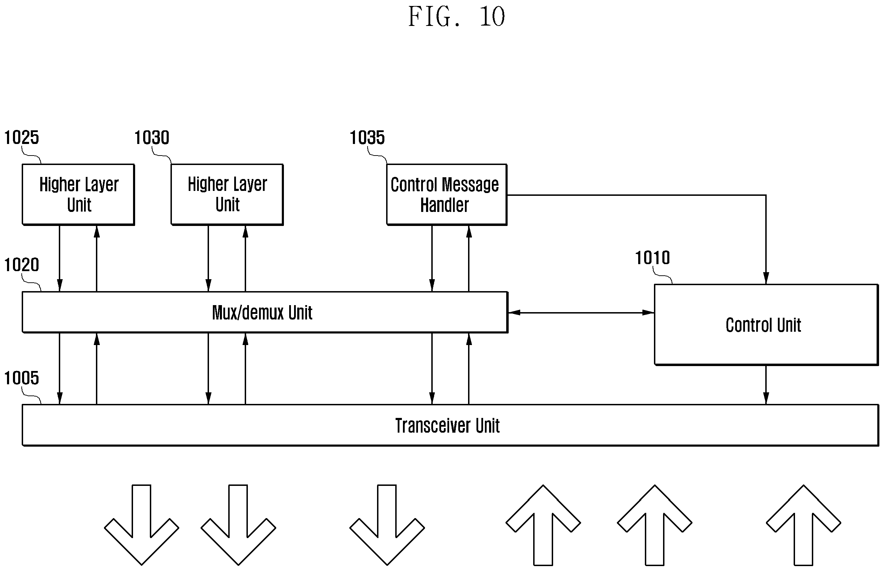

FIG. 10 is a block diagram of a user equipment according to an embodiment of the present disclosure.

Referring to FIG. 10, the user equipment may include a transceiver unit 1005, a control unit 1010, a mux/demux unit 1015, a control message handler 1030, and various higher layer units 1020 and 1025.

The transceiver unit 1005 receives data and control signals through downlink channels of a serving cell and sends data and control signals through uplink channels. When multiple serving cells are configured, the transceiver unit 1005 may send and receive data and control signals through the serving cells.

The mux/demux unit 1015 multiplexes data coming from the higher layer units 1020 and 1025 or the control message handler 1030, and demultiplexes data received by the transceiver unit 1005 and forwards the demultiplexed data to the higher layer units 1020 and 1025 or the control message handler 1030.

The control message handler 1030 processes a control message received from a base station and performs a corresponding operation. For example, when DRX related parameters are received, the control message handler 1030 forwards the same to the control unit 1010.

The higher layer units 1020 and 1025 may be configured on a service basis. The higher layer units 1020 and 1025 may process user data generated by service applications such as File Transfer Protocol (FTP) and Voice over Internet Protocol (VoIP) and forward the processed user data to the mux/demux unit 1015, and delivers data coming from the mux/demux unit 1015 to appropriate service applications at the higher layer.

The control unit 1010 examines scheduling commands such as UL grants received through the transceiver unit 1005, and controls the transceiver unit 1005 and the mux/demux unit 1015 so that uplink transmissions are performed at proper points in time with appropriate transmission resources. The control unit 1010 controls the transceiver unit 1005 for DRX operation and CSI/SRS transmission.

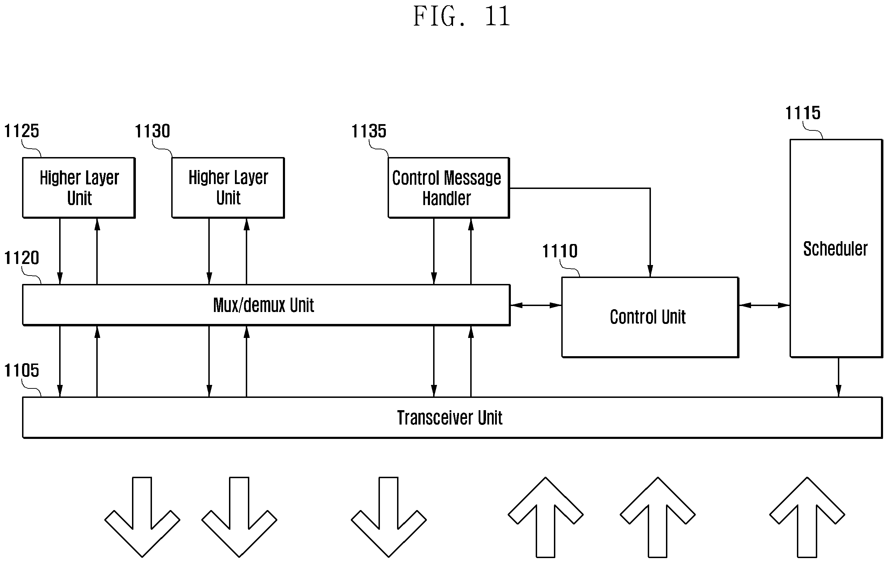

FIG. 11 is a block diagram of a base station according to an embodiment of the present disclosure. The base station of FIG. 11 includes a transceiver unit 1105, a control unit 1110, a mux/demux unit 1120, a control message handler 1135, various higher layer units 1125 and 1130, and a scheduler 1115.

The transceiver unit 1105 sends data and control signals through a downlink carrier and receives data and control signals through an uplink carrier. When multiple carriers are configured, the transceiver unit 1105 may send and receive data and control signals through the multiple carriers.

The mux/demux unit 1120 multiplexes data coming from the higher layer units 1125 and 1130 or the control message handler 1135, and demultiplexes data received by the transceiver unit 1105 and forwards the demultiplexed data to the higher layer units 1125 and 1130, the control message handler 1135 or the control unit 1110. The control message handler 1135 processes a control message received from a user equipment and performs a corresponding operation, and generates a control message to be sent to a user equipment and forwards the control message to a lower layer.

The higher layer units 1125 and 1130 may be configured on a terminal and service basis. The higher layer units 1125 and 1130 may process user data generated by service applications such as FTP and VoIP and forward the processed user data to the mux/demux unit 1120, and process data coming from the mux/demux unit 1120 and deliver the processed data to service applications at the higher layer.

The control unit 1110 determines CSI/SRS transmission times of user equipments and controls the transceiver unit 1105 accordingly.

The scheduler 1115 allocates transmission resources to a user equipment at appropriate points in time in consideration of buffer states, channel states and active time of the user equipment, and controls the transceiver unit 1105 to send or receive a signal to or from the user equipment.

While the present disclosure has been shown and described with reference to various embodiments thereof, it should be understood by those skilled in the art that many variations and modifications of the method and apparatus described herein will still fall within the scope of the present disclosure as defined in the appended claims and their equivalents.

## Claims

1. A method for transmitting control information by a terminal in a wireless communication system, the method comprising:
receiving (415) downlink control information in a first subframe;
determining to transmit control information in a third subframe,
wherein the third subframe is every subframe among the first subframe to the last subframe of the active time;
transmitting the control information in the third subframe;
determining whether to transmit control information in a second subframe following the first subframe, wherein the second subframe is every subframe following the last subframe of the active time duration and prior to the m-th subframe following the first subframe, wherein m is 4; and
transmitting the control information in the second subframe based on the determination whether to transmit control information in the second subframe,
wherein the first subframe is determined to be a n-th subframe prior to the last subframe of the active time duration, the n being an integer value from 1 to 2.

2. The method of claim 1, wherein the control information includes at least one of a channel quality indicator, CQI, a precoding matrix indicator, PMI, a rank indicator, RI, a precoding type indicator, PTI, or a sounding reference signal, SRS.

3. The method of claim 1, wherein the downlink control information is received via a physical downlink control channel, PDCCH.

4. The method of claim 1, wherein determining whether to transmit the control information in the second subframe is based on capability of the terminal.

5. A terminal (135) for transmitting control information in a wireless communication system, the terminal comprising:
a transceiver configured to transmit and receive a signal; and
a controller configured to control to
receive downlink control information in a first subframe,
determine to transmitting control information in a third subframe,
wherein the third subframe is every subframe among the first subframe to the last subframe of the active time
determine whether to transmit control information in a second subframe following the first subframe, wherein the second subframe is every subframe following the last subframe of the active time duration and prior to the m-th subframe following the first subframe, wherein m is 4; and
transmit the control information in the third subframe;
transmit the control information in the second subframe based on the determination whether to transmit control information in the second subframe,
wherein the first subframe is determined to be a n-th subframe prior to the last subframe of the active time duration, the n being an integer value from 1 to 2.

6. The terminal of claim 5, wherein the control information includes at least one of a channel quality indicator, CQI, a precoding matrix indicator, PMI, a rank indicator, RI, a precoding type indicator, PTI, or a sounding reference signal, SRS.

7. The terminal of claim 5, wherein the downlink control information is received via a physical downlink control channel, PDCCH.

8. The terminal of claim 6, wherein the controller is further configured to determine whether to transmit the control information in the second subframe based on capability of the terminal.

## Patentansprüche

1. Verfahren zum Übertragen von Steuerinformationen von einem Endgerät in einem drahtlosen Kommunikationssystem, wobei das Verfahren Folgendes umfasst:
Empfangen (415) von Downlink-Steuerinformationen in einem ersten Teilrahmen;
Bestimmen, Steuerinformationen in einem dritten Teilrahmen zu übertragen,
wobei der dritte Teilrahmen jeder Teilrahmen von dem ersten Teilrahmen bis zu dem letzten Teilrahmen der aktiven Zeit ist;
Übertragen der Steuerinformationen in dem dritten Teilrahmen;
Bestimmen, ob Steuerinformationen in einem zweiten Teilrahmen nach dem ersten Teilrahmen übertragen werden sollen, wobei der zweite Teilrahmen jeder Teilrahmen nach dem letzten Teilrahmen der aktiven Zeitdauer und vor dem m-ten Teilrahmen nach dem ersten Teilrahmen ist, wobei m 4 ist; und
Übertragen der Steuerinformationen in dem zweiten Teilrahmen basierend auf der Bestimmung, ob Steuerinformationen in dem vierten Unterrahmen übertragen werden sollen,
wobei der erste Teilrahmen als ein n-ter Teilrahmen vor dem letzten Teilrahmen der aktiven Zeitdauer bestimmt wird, wobei n ein ganzzahliger Wert von 1 bis 2 ist.

2. Verfahren nach Anspruch 1, wobei die Steuerinformationen mindestens einen von einem Kanalqualitätsindikator, Channel Quality Indicator - CQI, einem Vorcodierungsmatrixindikator, Precoding Matrix Indicator - PMI, einem Rangindikator, RI, einem Vorcodierungstypindikator, Precoding Type Indicator - PTI, oder einem Geräuschreferenzsignal, Sounding Reference Signal - SRS, beinhalten.

3. Verfahren nach Anspruch 1, wobei die Downlink-Steuerinformationen über einen physischen Downlink-Steuerkanal, Physical Downlink Control Channel - PDCCH, empfangen werden.

4. Verfahren nach Anspruch 1, wobei das Bestimmen, ob die Steuerinformationen in dem zweiten Unterrahmen übertragen werden sollen, auf einer Fähigkeit des Endgeräts basiert.

5. Endgerät (135) zum Übertragen von Steuerinformationen in einem drahtlosen Kommunikationssystem, wobei das Endgerät Folgendes umfasst:
einen Sendeempfänger, der zum Übertragen und Empfangen von Signalen konfiguriert ist; und
eine Steuerung, die zu Folgendem konfiguriert ist
Empfangen von Downlink-Steuerinformationen in einem ersten Teilrahmen,
Bestimmen, Steuerinformationen in einem dritten Teilrahmen zu übertragen,
wobei der dritte Teilrahmen jeder Teilrahmen von dem ersten Teilrahmen bis zu dem letzten Teilrahmen der aktiven Zeit ist;
Bestimmen, ob Steuerinformationen in einem zweiten Teilrahmen nach dem ersten Teilrahmen übertragen werden sollen, wobei der zweite Teilrahmen jeder Teilrahmen nach dem letzten Teilrahmen der aktiven Zeitdauer und vor dem m-ten Teilrahmen nach dem ersten Teilrahmen ist, wobei m 4 ist; und
Übertragen der Steuerinformationen in dem dritten Teilrahmen;
Übertragen der Steuerinformationen in dem zweiten Teilrahmen basierend auf der Bestimmung, ob Steuerinformationen in dem zweiten Teilrahmen übertragen werden sollen,
wobei der erste Teilrahmen als ein n-ter Teilrahmen vor dem letzten Teilrahmen der aktiven Zeitdauer bestimmt wird, wobei n ein ganzzahliger Wert von 1 bis 2 ist.

6. Endgerät nach Anspruch 5, wobei die Steuerinformationen mindestens einen von einem Kanalqualitätsindikator, Channel Quality Indicator - CQI, einem Vorcodierungsmatrixindikator, Precoding Matrix Indicator - PMI, einem Rangindikator, RI, einem Vorcodierungstypindikator, Precoding Type Indicator - PTI, oder einem Geräuschreferenzsignal, Sounding Reference Signal - SRS, beinhalten.

7. Endgerät nach Anspruch 5, wobei die Downlink-Steuerinformationen über einen physischen Downlink-Steuerkanal, Physical Downlink Control Channel - PDCCH, empfangen werden.

8. Endgerät nach Anspruch 5, wobei die Steuerung ferner konfiguriert ist, basierend auf einer Fähigkeit des Endgeräts zu bestimmen, ob die Steuerinformationen in dem zweiten Unterrahmen übertragen werden sollen.

## Revendications

1. Procédé de transmission d'informations de commande par un terminal dans un système de communication sans fil, le procédé comprenant :
la réception (415) d'informations de commande de liaison descendante dans une première sous-trame ;
la détermination de transmettre des informations de commande dans une troisième sous-trame ;
dans lequel la troisième sous-trame est chaque sous-trame de la première sous-trame à la dernière sous-trame du temps actif ;
la transmission des informations de commande dans la troisième sous-trame ;
la détermination s'il faut transmettre des informations de commande dans une deuxième sous-trame suivant la première sous-trame, dans lequel la deuxième sous-trame est chaque sous-trame suivant la dernière sous-trame de la durée de temps actif et avant la m-ième sous-trame suivant la première sous-trame, dans lequel m est 4 ; et
la transmission des informations de commande dans la deuxième sous-trame sur la base de la détermination s'il faut transmettre des informations de commande dans la deuxième sous-trame,
dans lequel il est déterminé que la première sous-trame est une n-ième sous-trame avant la dernière sous-trame de la durée de temps actif, n étant un nombre entier de 1 à 2.

2. Procédé selon la revendication 1, dans lequel les informations de commande comprennent au moins l'un d'un indicateur de qualité de canal, CQI, d'un indicateur de matrice de précodage, PMI, d'un indicateur de rang, RI, d'un indicateur de type de précodage, PTI, ou d'un signal de référence de sondage, SRS.

3. Procédé selon la revendication 1, dans lequel les informations de commande de liaison descendante sont reçues par l'intermédiaire d'un canal de commande de liaison descendante physique, PDCCH.

4. Procédé selon la revendication 1, dans lequel la détermination s'il faut transmettre les informations de commande dans la deuxième sous-trame est basée sur une capacité du terminal.

5. Terminal (135) de transmission d'informations de commande dans un système de communication sans fil, le terminal comprenant :
un émetteur-récepteur configuré pour effectuer la transmission et la réception d'un signal ; et
un organe de commande configuré pour commander d'effectuer :
la réception d'informations de commande de liaison descendante dans une première sous-trame ;
la détermination de transmettre des informations de commande dans une troisième sous-trame ;
dans lequel la troisième sous-trame est chaque sous-trame de la première sous-trame à la dernière sous-trame du temps actif ;
la détermination s'il faut transmettre des informations de commande dans une deuxième sous-trame suivant la première sous-trame, dans lequel la deuxième sous-trame est chaque sous-trame suivant la dernière sous-trame de la durée de temps actif et avant la m-ième sous-trame suivant la première sous-trame, dans lequel m est 4 ; et
la transmission des informations de commande dans la troisième sous-trame ;
la transmission des informations de commande dans la deuxième sous-trame sur la base de la détermination s'il faut transmettre des informations de commande dans la deuxième sous-trame,
dans lequel il est déterminé que la première sous-trame est une n-ième sous-trame avant la dernière sous-trame de la durée de temps actif, n étant un nombre entier de 1 à 2.

6. Terminal selon la revendication 5, dans lequel les informations de commande comprennent au moins l'un d'un indicateur de qualité de canal, CQI, d'un indicateur de matrice de précodage, PMI, d'un indicateur de rang, RI, d'un indicateur de type de précodage, PTI, ou d'un signal de référence de sondage, SRS.

7. Terminal selon la revendication 5, dans lequel les informations de commande de liaison descendante sont reçues par l'intermédiaire d'un canal de commande de liaison descendante physique, PDCCH.

8. Terminal selon la revendication 5, dans lequel l'organe de commande est en outre configuré pour effectuer la détermination s'il faut transmettre les informations de commande dans la deuxième sous-trame sur la base d'une capacité du terminal.
